# FASCICULE DE BREVET EUROPEEN

(11) **EP 3 119 634 B1**
(45) Date de publication et mention de la délivrance du brevet: **07.03.2018**
(21) Numéro de dépôt: 15715339.6
(22) Date de dépôt: 12.03.2015
(51) Int. Cl.: B60K 11/08, B60K 11/04

(54) **ASSEMBLAGE D'UN GUIDE D'AIR A UN ÉLÉMENT STRUCTUREL DE VÉHICULE AUTOMOBILE ET VÉHICULE CORRESPONDANT**
ZUSAMMENBAU EINER LUFTFÜHRUNG MIT EINEM STRUKTURELEMENT EINES KRAFTFAHRZEUGS UND ZUGEHÖRIGES FAHRZEUG
ASSEMBLY OF AN AIR GUIDE TO A STRUCTURAL ELEMENT OF A MOTOR VEHICLE AND ASSOCIATED VEHICLE

(30) Priorité: 17.03.2014 FR 1452185
(43) Date de publication de la demande: 25.01.2017
(73) Titulaire: Renault S.A.S., 92100 Boulogne-Billancourt (FR)
(72) Inventeur: BUI, Joseph, 78130 Les Mureaux (FR); JANIER, Benoit, 92370 Chaville (FR); GREVET, Stephane, 7735 Pontcarre (FR); DAUBOIN, Gilles, 77176 Nandy (FR)
(86) Numéro de dépôt international: PCT/FR2015/050619
(87) Numéro de publication internationale: WO 2015/140452

(56) Documents cités:
- DE-A1-102007 024 898
- DE-A1-102012 102 933
- FR-A1- 2 948 903
- FR-A1- 2 981 887
- US-A- 4 944 540

## Description

L'invention concerne un assemblage d'un guide d'air à un élément structurel de véhicule automobile et un véhicule correspondant.

Un tel guide d'air a pour fonction de canaliser l'air pénétrant par au moins une ouverture ou grille d'aération dans la façade avant ou peau de bouclier avant du véhicule pour le conduire à un ensemble d'éléments regroupés dans ce qu'on appelle une « valise de refroidissement ». Par ce terme, on désigne l'ensemble des éléments nécessaires au refroidissement du moteur, parfois empilés en couches ou en partie superposés. La valise de refroidissement se compose classiquement du radiateur à eau de refroidissement moteur, éventuellement de l'échangeur air-air (Refroidisseur Air Suralimentation- RAS) et du condenseur.

On appelle dans le métier « face avant technique » (FAT), une structure qui se trouve en avant du bloc moteur et qui a pour fonction de supporter différents organes, principalement le radiateur du bloc moteur. La FAT peut prendre de multiples formes. Dans certains cas, elle se réduit à une simple poutre transversale. Dans d'autres cas, elle constitue un châssis de forme plus ou moins complexe intégrant la valise de refroidissement. La FAT intègre différentes fonctions telles que support de butées de capot, support de serrure de capot ou d'un jambage supportant la serrure de capot, etc.

Usuellement, le guide d'air est fixé par des moyens de fixation sur un élément structurel de la FAT. Ces moyens de fixation comprennent une partie de réception s'étendant suivant la direction transversale du véhicule et solidaire de la FAT et un doigt de clippage reçu dans un orifice de la partie de réception s'étendant suivant la direction longitudinale du véhicule et solidaire du guide d'air. Dans la mesure où la partie de réception s'étend transversalement au véhicule, en cas de faible choc frontal et de rupture du doigt de clippage, le guide d'air vient en butée contre cette partie de réception et appuie donc sur la FAT et les organes qu'elle supporte, notamment le radiateur. Ainsi, lors d'un recul du guide d'air en direction de l'arrière du véhicule suite à un choc frontal, cet appui est susceptible d'endommager le ou les organes supportés par la FAT, même lors d'un faible choc. Il peut alors s'avérer nécessaire de remplacer ces organes, ce qui augmente les frais de réparation. Souvent, le guide d'air comporte des parties déformables permettant d'absorber une partie du choc et de limiter l'endommagement des organes supportés par la FAT. Cependant, les zones des moyens de fixation du guide d'air à la FAT, du fait de leur fonction de fixation, ne peuvent être déformables et forment ainsi des points durs favorisant l'appui du guide d'air sur la FAT.

Un assemblage d'un guide d'air selon le préambule de la revendication 1 est connu du document FR-A-2 981 887.

Il existe donc un besoin pour des moyens de fixation d'un guide d'air à un élément fixe du véhicule qui permettent de limiter l'endommagement des pièces supportées par cet élément fixe lors d'un choc contre la face avant du véhicule.

A cet effet, l'objet de l'invention concerne un assemblage d'un guide d'air à un élément structurel d'un véhicule automobile comprenant au moins deux moyens de fixation du guide d'air à l'élément structurel, lesdits moyens de fixation étant disposés sur des bords latéraux dudit guide d'air et de l'élément structurel, chaque moyen de fixation comprenant un premier élément de fixation solidaire du guide d'air et un deuxième élément de fixation solidaire de l'élément structurel, les premier et deuxième éléments de fixation étant conformés pour coopérer suivant une même direction de fixation, les moyens de fixation faisant saillie latéralement d'un cadre défini par les bords latéraux de l'élément structurel suivant une direction sensiblement perpendiculaire à la direction de fixation, caractérisé en ce que :
- le premier élément de fixation est solidarisé au guide d'air par des moyens de maintien conformés pour se rompre suite à un choc suivant une direction sensiblement parallèle à la direction de fixation,
- les bords latéraux du guide d'air présentent des parties de guidage situées sensiblement en regard des deuxièmes éléments de fixation, chaque partie de guidage étant conformée pour guider un bord latéral de l'élément structurel supportant un deuxième élément de fixation à l'intérieur du guide d'air suite à une rupture des moyens de maintien du premier élément de fixation coopérant avec ledit deuxième élément de fixation, cette rupture résultant d'un déplacement du guide d'air vers l'élément structurel suivant une direction sensiblement parallèle à la direction de fixation.

Un tel agencement permet un déplacement du guide d'air par rapport à l'élément structurel et d'éviter ainsi que le guide d'air vienne en butée contre l'élément structurel, notamment contre un élément de fixation de ce dernier, lors d'un faible choc frontal, réduisant ainsi le risque d'endommagement d'organes portés par cet élément structurel est réduit.

La rupture des moyens de maintien peut être obtenue par la réalisation de formes fusibles et/ou sécables, telles que par exemple des charnières film ou pré-fendues, des zones restreintes en épaisseur, des fentes, des encoches, ...

Les parties de guidage peuvent notamment être conformée pour guider un deuxième élément de fixation à l'intérieur du guide d'air.

Les parties de guidage peuvent former ou faire partie de parois latérales du guide d'air. Les bords libres de ces parois latérales du guide d'air forment les bords latéraux du guide d'air.

Avantageusement et de manière non limitative, cet évitement de l'élément structurel peut être obtenu au moyen d'un bord libre d'une partie de guidage dirigé vers l'élément structurel, ce bord libre n'étant pas en regard de cet élément structurel suivant la direction de fixation. Autrement dit, le bord libre du guide d'air, lequel peut faire partie d'un bord latéral du guide d'air, n'est pas en regard d'un bord latéral de l'élément structurel.

Avantageusement et de manière non limitative, une partie de guidage peut définir une concavité ouverte vers l'intérieur du guide d'air et vers l'élément structurel, ladite concavité présentant une forme évasée depuis le guide d'air vers l'élément structurel suivant une direction sensiblement parallèle à la direction de fixation. Le bord latéral de l'élément structurel est alors guidé par les surfaces de cette concavité lors d'un déplacement du guide d'air vers l'élément structurel. La forme évasée facilite « l'entrée » du bord latéral de l'élément structurel, notamment d'un deuxième élément de fixation, à l'intérieur de la concavité lors de ce déplacement. La concavité peut comprendre une ou plusieurs surfaces planes, par exemple trois surfaces planes.

En particulier, une partie de guidage peut définir une concavité évasée sur une partie seulement de sa surface interne. Par exemple, la partie de guidage peut présenter au moins un pan incliné, par exemple un seul pan incliné, s'évasant en direction de l'élément structurel suivant une direction sensiblement parallèle à la direction de fixation. Ce pan incliné peut notamment être une surface plane. Eventuellement, l'extrémité libre de ce pan incliné peut être davantage inclinée vers l'extérieur du guide d'air, de sorte que l'extrémité de la concavité est davantage évasée. Le pan peut être incliné par rapport à une paroi latérale du guide d'air dont fait partie la partie de guidage.

De manière générale, les dimensions de la concavité de forme évasée peuvent être choisies en fonction des dimensions du deuxième élément de fixation de sorte que ce deuxième élément de fixation puisse être guidé à l'intérieur de la concavité.

Avantageusement et de manière non limitative, les moyens de maintien peuvent relier un premier élément de fixation à une partie de guidage. Ceci peut faciliter le guidage du deuxième élément à l'intérieur de la partie de guidage, cette dernière étant alors très proche du deuxième élément de guidage.

Avantageusement, le premier élément de fixation peut être situé au moins en partie à l'intérieur de la partie de guidage, ce qui peut davantage faciliter le guidage du deuxième élément à l'intérieur de celle-ci.

Par exemple, les moyens de maintien peuvent relier un premier élément de fixation à un bord libre de la partie de guidage, ce qui peut faciliter la réalisation des moyens de maintien.

Notamment, le bord libre de cette partie de guidage peut être un bord libre de la concavité de forme évasée définie plus haut, notamment le bord libre d'un pan incliné. Il peut alors être possible de régler la force de rupture des moyens de maintien en fonction de l'inclinaison de la forme évasée.

Enfin, le premier élément de fixation peut en outre être conformé pour fermer, au moins en partie, l'ouverture de cette concavité dirigée vers l'élément structurel lorsqu'il est solidaire de la partie de guidage.

Avantageusement et de manière non limitative, les moyens de maintien peuvent comprendre une charnière reliant le premier élément de fixation à un bord libre de ladite partie de guidage.

Cette charnière peut notamment être une charnière film, une charnière mince, pré-fendue, avec encoches ou non. Autrement dit, les moyens de maintien peuvent être réalisés d'une pièce avec le guide d'air et le premier élément de fixation, ces derniers étant en matériau polymère. Une telle charnière permet alors de faciliter la réalisation du guide d'air par moulage, le premier élément de fixation étant moulé dans une position dite de moulage, permettant le moulage, et ensuite pivoté jusqu'à une position d'utilisation. La position de moulage est par exemple située à 90° de la position d'utilisation.

Avantageusement et de manière non limitative, les moyens de maintien peuvent comprendre au moins un élément de maintien conformé pour maintenir le premier élément de fixation, notamment dans une position d'utilisation dans laquelle il peut coopérer avec le deuxième élément de fixation. Selon la position du premier élément de fixation, le ou les éléments de maintien peuvent être internes ou externes au guide d'air, notamment à la partie de guidage.

Cet élément de maintien peut être choisi parmi :
- une butée formée par un bossage de la partie de guidage,
- une butée rapportée fixée à la partie de guidage,
- une patte de fixation solidaire de la partie de guidage et du premier élément de fixation,
- une patte de fixation solidaire du premier élément de fixation dont une extrémité est insérée dans, ou en prise avec, un orifice de la partie de guidage.

Ces différentes butées et pattes de fixation peuvent notamment être conformées :
- afin d'empêcher le premier élément de fixation de se déplacer vers l'intérieur du guide d'air suivant une direction sensiblement parallèle à la direction de fixation.
- afin d'autoriser un tel déplacement lorsqu'une rupture est souhaitée, par exemple en cas d'un choc frontal de force prédéterminée.

A cet effet, le nombre, la position, les dimensions de ces butées et/ou le mode de fixation d'une butée rapportée peuvent par exemple être choisis en conséquence. Une butée peut par exemple faire saillie, notamment à l'intérieur de la partie de guidage, suivant une direction sensiblement perpendiculaire à la direction de fixation. Le nombre de butées peut être de deux ou plus, sans toutefois y être limité.

De manière similaire, le nombre, la position, les dimensions et la forme d'une patte de fixation peut être déterminée en fonction du point de rupture souhaité. Le nombre de pattes de fixation peut être de deux ou plus, sans toutefois y être limité.

Par exemple, une patte de fixation solidaire de la partie de guidage et du premier élément de fixation peut relier des faces externes adjacentes de la partie de guidage et du premier élément de fixation.

Selon un autre exemple, une patte de fixation solidaire du premier élément de fixation dont une extrémité est insérée dans, ou en prise avec, un orifice de la partie de guidage, peut s'étendre sensiblement parallèlement à la direction de fixation, par exemple à l'intérieur du guide d'air, notamment à l'intérieur de la partie de guidage. L'orifice peut être un orifice traversant. L'extrémité insérée dans l'orifice ou en prise avec celui-ci peut être conformée de manière à faciliter l'extraction de la patte de fixation hors de l'orifice. Ainsi, cette extrémité peut présenter une forme arrondie.

Lorsque l'élément de maintien est une patte de fixation solidaire du premier élément de fixation dont une extrémité est insérée dans, ou en prise avec, un orifice de la partie de guidage, la partie de guidage peut comprendre des surfaces inclinées conformées pour écarter ladite patte de fixation de l'orifice de la partie de guidage lors d'un déplacement du premier élément de fixation en direction de la partie de guidage, notamment suivant une direction sensiblement parallèle à la direction de fixation, cet écartement étant suffisant pour provoquer le dégagement de l'extrémité de la patte de fixation hors dudit orifice. De telles surfaces inclinées permettent ainsi, de manière simple, de faciliter le dégagement d'une patte de fixation. Ces surfaces inclinées peuvent être solidaires d'une face interne de la partie de guidage.

Les différents moyens de maintien décrits ci-dessus peuvent être combinés entre eux ou non. Notamment, on pourra combiner un moyen de maintien en forme de charnière et un ou plusieurs éléments de maintien de type butée ou patte de fixation, ou utiliser uniquement plusieurs éléments de maintien ou toute autre combinaison.

Le premier élément de fixation et le deuxième élément de fixation des moyens de fixation peuvent être choisis parmi un clip de fixation et une partie de réception, le clip de fixation étant conformé pour s'encliqueter dans la partie de réception suivant la direction de fixation. Par exemple, le premier élément de fixation peut être un clip de fixation. L'invention n'est toutefois pas limitée à ce mode de réalisation. En particulier, les premier et deuxième éléments de fixation peuvent être une plaque percée pour recevoir un rivet, une vis ou analogue.

L'invention n'est pas limitée non plus par le nombre et la position des moyens de fixation, on pourra ainsi prévoir plus de deux moyens de fixation, répartis ou non, sur deux ou plusieurs bords latéraux du guide d'air et de l'élément structurel.

L'invention concerne également un guide d'air destiné à être assemblé à un élément structurel d'un véhicule automobile, tel que décrit précédemment.

Un tel guide d'air comprend au moins deux premiers éléments de fixation disposés sur des bords latéraux et destinés à coopérer avec des deuxièmes éléments de fixation solidaires dudit élément structurel suivant une même direction de fixation, les premiers éléments de fixation faisant saillie latéralement d'un cadre défini par les bords latéraux de l'élément structurel suivant une direction sensiblement perpendiculaire à la direction de fixation, lorsque le guide d'air est assemblé à l'élément structurel, et comprend les
caractéristiques suivantes :
- le premier élément de fixation est solidarisé au guide d'air par des moyens de maintien conformés pour se rompre suite à un choc suivant une direction sensiblement parallèle à la direction de fixation,
- les bords latéraux du guide d'air présentent des parties de guidage situées sensiblement en regard des deuxièmes éléments de fixation lorsque le guide d'air est assemblé à l'élément structurel, chaque partie de guidage étant conformée pour guider un bord latéral de l'élément structurel supportant un deuxième élément de fixation à l'intérieur du guide d'air suite à une rupture du premier élément de fixation coopérant avec ledit deuxième élément de fixation, cette rupture résultant d'un déplacement du guide d'air vers l'élément structurel suivant une direction sensiblement parallèle à la direction de fixation.

Les parties de guidage, les moyens de maintien et les premiers éléments de fixation peuvent être tels que décrit précédemment.

L'invention concerne en outre un véhicule automobile comprenant un guide d'air selon l'invention.

L'invention concerne également un véhicule automobile équipé d'un assemblage selon l'invention, dans lequel la direction de fixation du guide d'air est parallèle ou sensiblement parallèle à la direction longitudinale du véhicule, le guide d'air étant fixé à l'avant de l'élément structurel. En particulier, l'élément structurel peut faire partie de la FAT du véhicule.

L'invention est maintenant décrite en référence aux dessins annexés, non limitatifs, dans lesquels :
- la figure 1 est une vue partielle en perspective de dessus montrant un assemblage selon un mode de réalisation de l'invention ;
- la figure 2 est une vue similaire à celle de la figure 1, suite à une rupture des moyens de fixation ;
- la figure 3 est une vue en perspective de l'intérieur d'un guide d'air de l'assemblage représenté sur les figures 1 et 2 ;
- les figures 4a et 4b représentent une vue de l'intérieur d'un guide d'air montrant une partie d'un moyen de fixation d'un assemblage selon un premier mode de réalisation, la figure 4c est une vue de détail d'un élément de maintien ;
- la figure 5a représente une vue de l'intérieur d'un guide d'air montrant une partie d'un moyen de fixation d'un assemblage selon un deuxième mode de réalisation, la figure 5b est une vue similaire de l'extérieur du guide d'air et la figure 5c est une vue de détail de la figure 5a ;
- la figure 6a représente une vue de l'intérieur d'un guide d'air montrant une partie d'un moyen de fixation d'un assemblage selon un troisième mode de réalisation, la figure 6b est une vue similaire de l'extérieur du guide d'air ;
- la figure 7a représente une vue de l'intérieur d'un guide d'air montrant une partie d'un moyen de fixation d'un assemblage selon un quatrième mode de réalisation correspondant au mode de réalisation des figures 1 à 3, la figure 7b est une vue similaire de l'extérieur du guide d'air.

Dans la présente description, les termes avant, arrière, supérieur, inférieur, font référence aux directions avant et arrière du véhicule, lorsque le guide d'air est monté sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire, on entend une direction/un angle s'écartant d'au plus ±20°, voire d'au plus 10° ou d'au plus 5° d'une direction parallèle, perpendiculaire ou d'un angle droit.

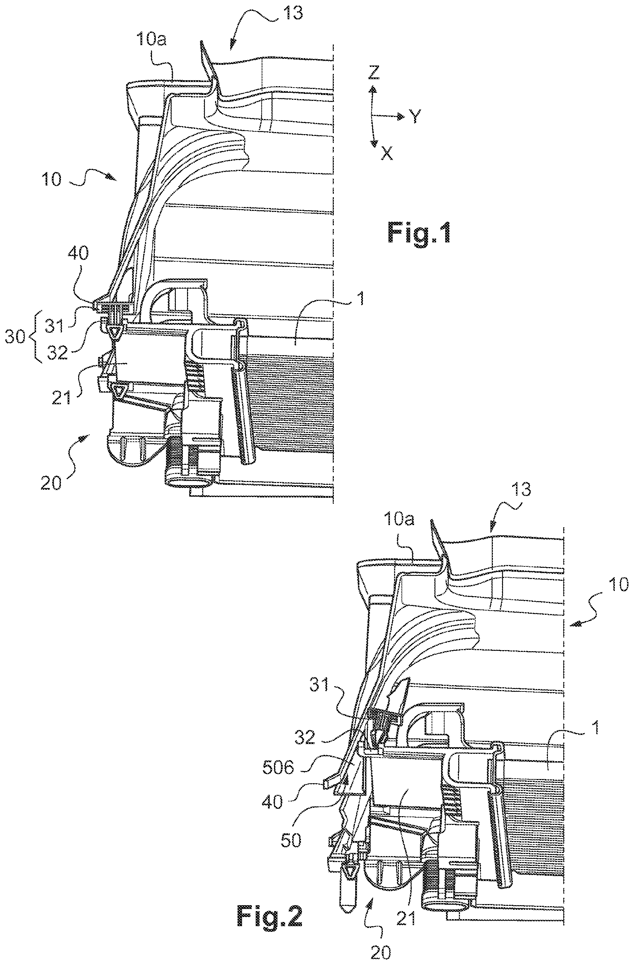

Les figures 1 et 2 représentent partiellement des assemblages d'un guide d'air 10 à un élément structurel 20 d'un véhicule automobile. Cet élément structurel 20 présente des bords latéraux 21 définissant un cadre. Sur les figures 1 et 2, seul un bord latéral vertical 21 est représenté, le cadre présentant une forme générale sensiblement rectangulaire. L'invention n'est toutefois pas limitée à cette forme de particulière. Cet élément structurel 20 fait partie de la FAT du véhicule et supporte un radiateur 1.

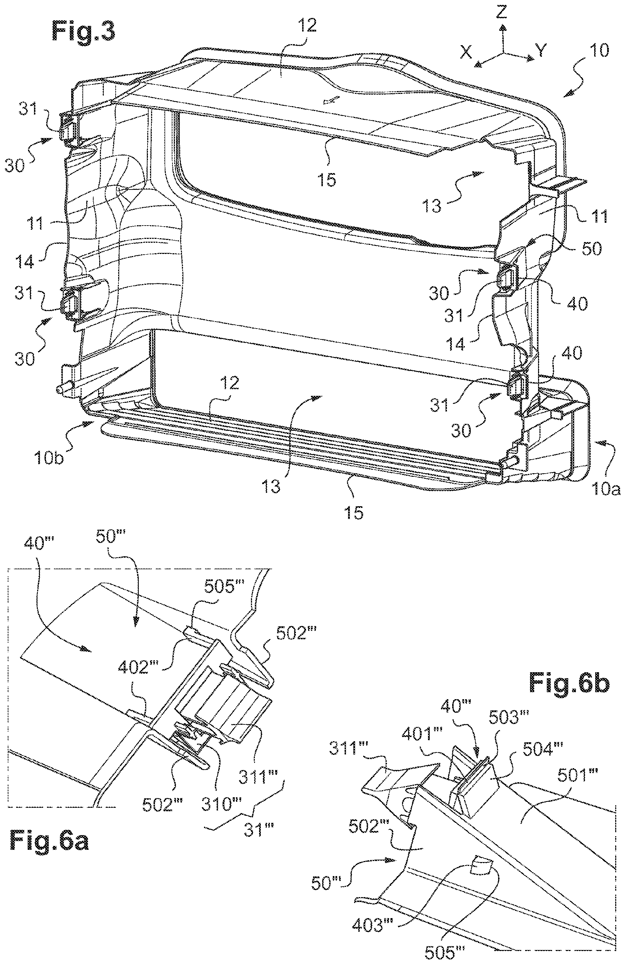

Le guide d'air 10, représenté en entier sur la figure 3, présente une face avant 10a (figures 1 et 2) dirigée vers l'avant du véhicule, et une face arrière 10b, visible figure 3. Le guide d'air 10 est assemblé à l'élément structurel 20 du côté de sa face arrière 10b. Le guide d'air 10 présente ici une forme sensiblement rectangulaire définie par des parois latérales 11, 12 : deux parois latérales sensiblement verticales 11 et deux parois latérales sensiblement horizontales 12. Le guide d'air 10 représenté définit en outre deux canaux de guidage 13. L'invention n'est pas limitée par la forme du guide d'air et/ou au nombre de canaux de guidage. Ces canaux de guidage 13 sont destinés à conduire l'air depuis une ouverture d'aération de la façade avant du véhicule (non représentée) jusqu'au radiateur 1 supporté par l'élément de structure 20.

Du côté de sa face arrière 10b, le guide d'air 10 présente des bords latéraux 14, 15 correspondant aux bords libres des parois latérales 11, 12 respectivement.

Le guide d'air 10 est assemblé à l'élément structurel 20 par plusieurs moyens de fixation 30 disposés sur les bords latéraux du guide d'air et de l'élément structurel. Dans l'exemple, ces moyens de fixation sont disposés sur les bords latéraux verticaux 14 et 21. Ils pourraient cependant être disposés sur des bords latéraux horizontaux ou sur des bords latéraux horizontaux et verticaux.

Chaque moyen de fixation 30 comprend un premier élément de fixation 31 solidaire du guide d'air 10 et un deuxième élément de fixation 32 solidaire de l'élément structurel 20 conformés pour coopérer suivant une même direction de fixation, ici la direction longitudinale X du véhicule. Ces moyens de fixation 30 font en outre saillie latéralement du cadre défini par les bords latéraux 21 de l'élément structurel 20 suivant une direction sensiblement perpendiculaire à la direction de fixation, autrement dit sensiblement dans le plan YZ.

Le premier élément de fixation 31 est solidarisé au guide d'air 10 par des moyens de maintien 40 conformés pour se rompre suite à un choc suivant une direction sensiblement parallèle à la direction de fixation. Le premier élément de fixation 31 peut ainsi occuper deux positions :
- une position d'utilisation (figure 1), dans laquelle il est relié au guide d'air 10 par les moyens de maintien 40 et dans laquelle il peut coopérer avec le deuxième élément de fixation 32 afin d'assurer l'assemblage du guide d'air 10 à l'élément structurel 20,
- une position libre (figure 2), dans laquelle il n'est plus relié au guide d'air suite à la rupture des moyens de maintien 40.

Le guide d'air 10 présente enfin sur ses bords latéraux 14 des parties de guidage 50 situées sensiblement en regard des deuxièmes éléments de fixation 32, notamment suivant la direction de fixation. Notamment, ces parties de guidage 50 sont disposées sur les bords latéraux 14 supportant les premiers éléments de fixation 31.

Chaque partie de guidage 50 est conformée pour guider un bord latéral 21 de l'élément structurel 20 supportant un deuxième élément de fixation 32 à l'intérieur du guide d'air 10 suite à une rupture des moyens de maintien 40 reliant le premier élément de fixation 31 au guide d'air 10, cette rupture résultant d'un déplacement du guide d'air 10 vers l'élément structurel 20 suivant une direction sensiblement parallèle à la direction de fixation, tel que représenté sur la figure 2.

Dans les exemples représentés sur les figures, les parties de guidage définissent une concavité ouverte vers l'intérieur du guide d'air et vers l'élément structurel, cette concavité présentant une forme évasée depuis le guide d'air vers l'élément structurel suivant une direction sensiblement parallèle à la direction de fixation. Cette forme similaire à un avaloir ou entonnoir facilite le guidage du deuxième élément de fixation 32 à l'intérieur d'une partie de guidage lors de la rupture des moyens de maintien 40 du premier élément de fixation 31 correspondant. En particulier, les bords de cette concavité ne sont pas situés en regard de l'élément structurel suivant une direction sensiblement parallèle à la direction de fixation, facilitant ainsi l'introduction du deuxième élément de guidage à l'intérieur de la partie de guidage et évitant au guide d'air d'être en butée contre le deuxième élément de guidage.

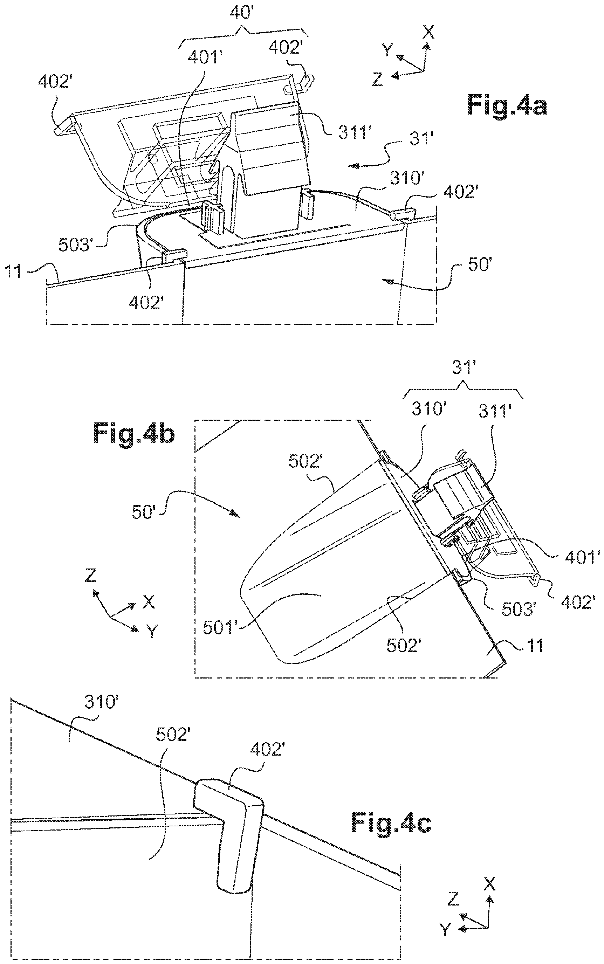

Des exemples de réalisation des parties de guidage et des moyens de maintien sont décrits en références aux figures 4 à 7. Dans les différents modes de réalisation décrits en référence aux figures 1 à 7, les mêmes éléments portent les mêmes références, avec éventuellement l'ajout d'un prime ('), seconde (") ou tierce ("') pour distinguer les mêmes éléments de formes différentes.

La figure 4a présente ainsi une partie de guidage 50' en forme de concavité évasée. Cette partie de guidage 50' présente un pan incliné 501' s'évasant en direction de l'élément structurel suivant une direction sensiblement parallèle à la direction de fixation (figure 4b). Ce pan incliné 501' s'étend sensiblement dans le prolongement de la paroi latérale 11 du guide d'air. Le reste de la concavité est défini par deux autres pans latéraux 502' sensiblement perpendiculaires par rapport à la paroi latérale 11. Ces différents pans 501' et 502' sont sensiblement plans et reliés par des formes arrondies.

Dans ce mode de réalisation, des moyens de maintien 40' relient le premier élément de fixation 31' à la partie de guidage 50', ces moyens de maintien 40' permettant un basculement du premier élément de fixation 31' par rapport à un bord libre 503' de la partie de guidage 50', tel que visible sur les figures 4a et 4b, ce bord libre 503' étant dirigé vers l'élément structurel 20. Ces figures 4a, 4b montrent le premier élément de fixation 31' dans la position d'utilisation et dans une troisième position dans laquelle il est relié à la partie de guidage mais dans une position autre que la position d'utilisation.

Le premier élément de fixation 31' présente ici une plaque support 310' supportant un clip de fixation 311'. Les moyens de maintien 40' relient ici la plaque support 310' à la partie de guidage 50'.

Les moyens de maintien 40' comprennent ici une charnière 401' et deux éléments de maintien 402', la charnière 401' s'étend entre la plaque support 310' et le bord libre 503' au niveau du pan incliné 501', les éléments de maintien 402' relient chacun la plaque support 310' et le bord libre 503' au niveau d'un pan latéral 502' dans la position d'utilisation (voir figure 4c). Dans cet exemple, la charnière 401' peut être une charnière film et chaque élément de maintien 402' est une patte de fixation, ici sensiblement en forme d'équerre, dont une partie est solidaire de la plaque support 310' et l'autre partie est solidaire de la face externe du pan latéral 502' de la partie de guidage 50' en position d'utilisation du premier élément de fixation 31'. Ces éléments de maintien 402' et la charnière 401' sont fusibles, ce qui peut être obtenu par un amincissement de matière, par réalisation de fentes, d'encoches, de formes sécables, ...

Le premier élément de fixation 31' peut ainsi être moulé avec le guide d'air dans une position de moulage située par exemple à 90° de la position d'utilisation, puis il est rabattu dans sa position d'utilisation, dans laquelle il ferme sensiblement la partie de guidage 50' en direction de l'élément structurel 20. Les éléments de maintien 402' peuvent ensuite être solidarisés au guide d'air.

En variante non représentée, le premier élément de fixation 31' pourrait être maintenu sur le guide d'air uniquement par des éléments de maintien 402' : il est alors fabriqué séparément du guide d'air puis solidarisé à ce dernier.

On notera que dans ce mode de réalisation, le premier élément de fixation 31' ferme l'extrémité ouverte de la partie de guidage 50' dirigée vers l'élément structurel, autrement dit dans la direction de fixation des moyens de fixation. En particulier, le premier élément de fixation 31' ferme l'extrémité ouverte de la partie de guidage 50' le long des bords libres de celle-ci.

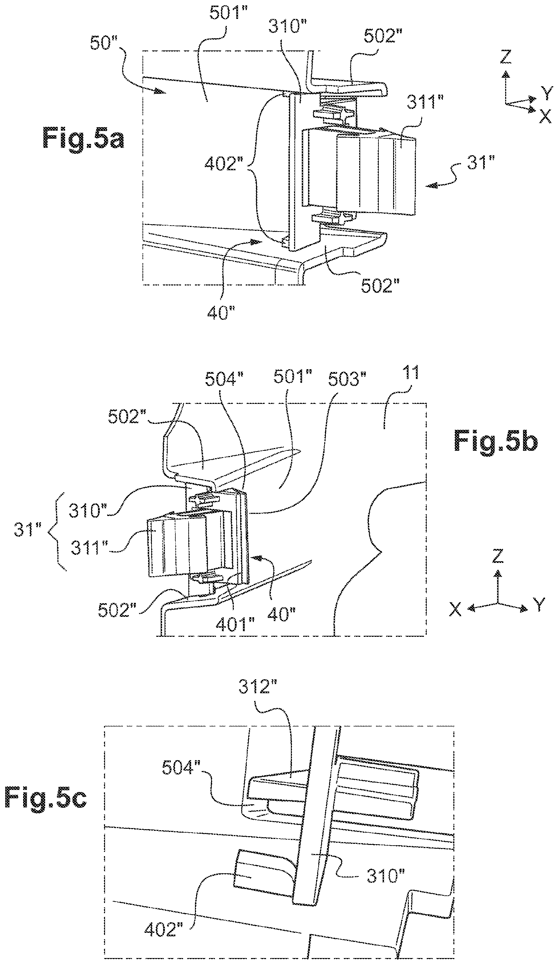

Les figures 5a à 5c représentent un autre mode de réalisation qui diffère du précédent par la forme de la partie de guidage 50" et par les moyens de maintien 40". Comme dans l'exemple précédent, le premier élément de fixation 31" présente ici une plaque support 310" supportant un clip de fixation 311" et les moyens de maintien 40" relient la plaque support 310" à la partie de guidage 50", mais en partie à l'intérieur de celle-ci.

Ce mode de réalisation diffère également du précédent par le fait que :
- les pans latéraux 502", sensiblement perpendiculaires à la paroi latérale 11, sont reliés au pan incliné central 501" s'évasant en direction de l'élément structurel suivant une direction sensiblement parallèle à la direction de fixation, par des coins et non des formes arrondies (figures 5a, 5b),
- les moyens de maintien 40" comprennent deux éléments de maintien 402" en forme de butées disposés sur les pans latéraux 502", sur la face interne de la partie de guidage 50", à distance du bord libre des pans latéraux 502",
- Les moyens de maintien 40" comprennent une charnière 401" s'étendant entre la plaque support 310" et le bord libre 503" de la partie de guidage 50", au niveau du pan incliné 501", ce bord libre 503" étant situé sur une portion d'extrémité 504" du pan incliné 501" davantage inclinée vers l'extérieur du guide d'air.

La plaque support 310" s'étend ainsi légèrement en dessous des bords libres des pans latéraux 502 ", de sorte que lors de la rupture des moyens de maintient 40", étant déjà en partie à l'intérieur de la partie de guidage 50", le deuxième élément de fixation coopérant avec le premier élément de fixation 31" ne peut sortir accidentellement de la partie de guidage 50".

Chaque butée 402" présente une surface d'extrémité en contact avec la plaque support 310" de forme arrondie, ce qui peut faciliter leur dépassement par la plaque support 310" suite à une rotation de celle-ci en direction du pan incliné 501", puis une rupture de la charnière 401". Cette rupture de la charnière 401" peut être facilitée par la présence de supports triangulaires 312" ou cames solidaires de la face de la plaque support 310" dirigée vers l'intérieur de la partie de guidage et en appui sur l'extrémité davantage inclinée 504" du pan 501" (figure 5c).

Les butées 402" peuvent être des butées rapportées ou être formées par un bossage de la paroi de la partie de guidage.

Le mode de réalisation représenté sur les figures 6a, 6b, diffère du précédent mode de réalisation essentiellement par la forme des éléments de maintien 402"'. Ici, le premier élément de fixation 31"' présente une plaque support 310"' supportant un clip de fixation 311"' et les moyens de maintien 40"' relient la plaque support 310"' à la partie de guidage 50"', également en partie à l'intérieur de celle-ci. A cet effet, une charnière 401'" s'étend entre la plaque support 310'" et le bord libre 503'" de la partie de guidage 50"', au niveau du pan incliné 501'", ce bord libre 503'" étant situé sur une portion d'extrémité 504'" du pan incliné 501'" davantage inclinée vers l'extérieur du guide d'air.

Les moyens de maintien 40'" comprennent deux éléments de maintien 402'" en forme de pattes de fixation dont une extrémité est solidaire de la face de la plaque support 310'" dirigée vers l'intérieur de la partie de guidage 50'" et dont l'autre extrémité 403'" traverse un orifice 505'" prévu à cet effet sur chaque pan latéral 502'" de la partie de guidage. On notera la forme arrondie de cette extrémité 403"', laquelle peut faciliter la sortie des pattes de fixation 402'" des orifices 505'" suite à un pivotement du premier élément de fixation 31'" vers l'intérieur de la partie de guidage.

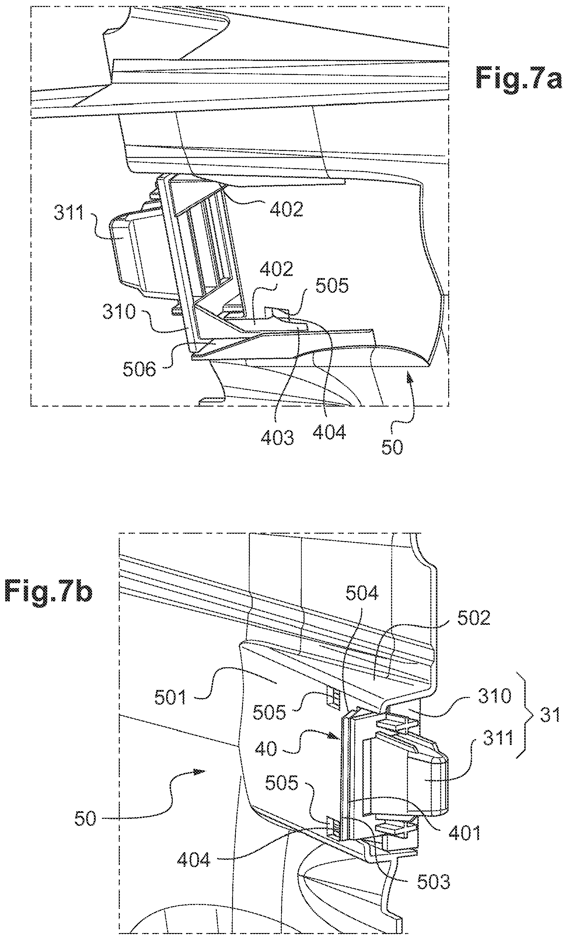

Le mode de réalisation représenté sur les figures 7a et 7b est proche du précédent, dont il diffère essentiellement par la position des orifices de réception des pattes de maintien. Ce mode de réalisation de la partie de guidage 50 et des moyens de maintien 40 correspond à celui visible sur les figures 1 à 3. Ici, le premier élément de fixation 31 présente une plaque support 310 supportant un clip de fixation 311 et les moyens de maintien 40 relient la plaque support 310 à la partie de guidage 50, également en partie à l'intérieur de celle-ci. A cet effet, une charnière 401 s'étend entre la plaque support 310 et le bord libre 503 de la partie de guidage 50, au niveau du pan incliné central 501, ce bord libre 503 étant situé sur une portion d'extrémité 504 du pan incliné 501 davantage inclinée vers l'extérieur du guide d'air.

Les moyens de maintien 40 comprennent deux éléments de maintien 402 en forme de pattes de fixation dont une extrémité est solidaire de la face de la plaque support 310 dirigée vers l'intérieur de la partie de guidage 50 et dont l'autre extrémité 403 pénètre un orifice 505 prévu à cet effet sur le pan incliné central 501 de la partie de guidage. Dans l'exemple représenté, une partie saillante 404 pénètre l'orifice 505, tel que visible sur la figure 7a. Cette partie saillante 404 est en forme de triangle dont l'angle de la pointe en saillie est obtus, ce qui peut faciliter la sortie de la patte de fixation hors de l'orifice 505.

Dans ce mode de réalisation, le dégagement des pattes de fixation 402 hors des orifices 505 est en outre davantage facilité par des surfaces inclinées 506 positionnées sur les faces internes des pans latéraux 502. Ces surfaces inclinées 506, dont l'une est visible aussi figure 2, sont conformées pour écarter les pattes de fixation 402 du pan latéral 402 adjacent au fur et à mesure du pivotement du premier élément de fixation 31 vers l'intérieur de la partie de guidage. Leur inclinaison est ainsi déterminée afin que l'écartement soit suffisant pour provoquer le dégagement de l'extrémité de la patte de fixation 402 hors de l'orifice 505. Autrement dit, lors de ce mouvement de pivotement, les pattes de fixation 402 se rapprochent l'une de l'autre et se dégagent ainsi des orifices 505.

Dans les modes de réalisation décrits en référence aux figures 6a, b, c et 7a, b, le premier élément de fixation 31'", 31 peut également comprendre de supports triangulaires ou cames solidaires de la face de la plaque support 310"', 310 dirigée vers l'intérieur de la partie de guidage et en appui sur l'extrémité davantage inclinée 504'", 504 du pan 501'", 501, pour faciliter la rupture de la charnière 401'",401 tel que décrit dans le mode de réalisation des figures 5a, b, c.

Dans les modes de réalisation décrits en référence aux figures, le premier élément de maintien est un clip de fixation, mais il pourrait également être une partie de réception d'un clip de fixation, par exemple une plaque percée conformée pour coopérer avec un clip de fixation, cette plaque pouvant être fixée et maintenue de la même manière que la plaque support décrite en référence aux figures. En variante, une plaque percée ou pleine pourrait être envisagée pour un assemblage par des rivets ou des vis.

## Revendications

1. Assemblage d'un guide d'air (10) à un élément structurel (20) d'un véhicule automobile comprenant au moins deux moyens de fixation (30) du guide d'air à l'élément structurel, lesdits moyens de fixation (30) étant disposés sur des bords latéraux (11, 21) dudit guide d'air et de l'élément structurel, chaque moyen de fixation (30) comprenant un premier élément de fixation (31, 31', 31", 31'") solidaire du guide d'air (10) et un deuxième élément de fixation (32) solidaire de l'élément structurel (20), les premier et deuxième éléments de fixation (31, 31', 31", 31"', 32) étant conformés pour coopérer suivant une même direction de fixation, les moyens de fixation (30) faisant saillie latéralement d'un cadre défini par les bords latéraux (21) de l'élément structurel suivant une direction sensiblement perpendiculaire à la direction de fixation, **caractérisé en ce que** :
- le premier élément de fixation (31, 31', 31", 31"') est solidarisé au guide d'air par des moyens de maintien (40, 40', 40", 40"') conformés pour se rompre suite à un choc suivant une direction sensiblement parallèle à la direction de fixation,
- les bords latéraux (11) du guide d'air présentent des parties de guidage (50, 50', 50", 50'") situées sensiblement en regard des deuxièmes éléments de fixation (32), chaque partie de guidage (50, 50', 50", 50'") étant conformée pour guider un bord latéral (21) de l'élément structurel supportant un deuxième élément de fixation (32) à l'intérieur du guide d'air suite à une rupture des moyens de maintien (40, 40', 40", 40"') du premier élément de fixation coopérant avec ledit deuxième élément de fixation, cette rupture résultant d'un déplacement du guide d'air vers l'élément structurel suivant une direction sensiblement parallèle à la direction de fixation.

2. Assemblage selon la revendication 1, **caractérisé en ce qu'**un bord libre (503, 503', 503", 503'") d'une partie de guidage dirigé vers l'élément structurel n'est pas en regard de cet élément structurel suivant la direction de fixation.

3. Assemblage selon l'une quelconque des revendications 1 ou 2, **caractérisé en ce qu'**une partie de guidage (50, 50', 50", 50'") définit une concavité ouverte vers l'intérieur du guide d'air et vers l'élément structurel, ladite concavité présentant une forme évasée depuis le guide d'air vers l'élément structurel suivant une direction sensiblement parallèle à la direction de fixation.

4. Assemblage selon la revendication 3, **caractérisé en ce que** la partie de guidage (50, 50', 50", 50'") présente au moins un pan incliné (501, 501', 501", 501'") s'évasant en direction de l'élément structurel suivant une direction sensiblement parallèle à la direction de fixation.

5. Assemblage selon l'une des revendications 1 à 4, **caractérisé en ce que** les moyens de maintien (40, 40', 40", 40"') relient un premier élément de fixation à une partie de guidage.

6. Assemblage selon l'une des revendications 1 à 5, **caractérisé en ce que** les moyens de maintien (40, 40', 40", 40"') comprennent une charnière (401, 401', 401", 401 ") reliant le premier élément de fixation à un bord libre (503, 503', 503", 503'") de ladite partie de guidage.

7. Assemblage selon l'une des revendications 1 à 6, **caractérisé en ce que** les moyens de maintien (40, 40', 40", 40"') comprennent au moins un élément de maintien (402, 402', 402", 402'"') conformé pour maintenir le premier élément de fixation, l'élément de maintien étant choisi parmi :
- une butée (402") formée par un bossage de la partie de guidage,
- une butée rapportée fixée à la partie de guidage,
- une patte de fixation (402') solidaire de la partie de guidage et du premier élément de fixation,
- une patte de fixation (402, 402'") solidaire du premier élément de fixation dont une extrémité est insérée dans, ou en prise avec, un orifice de la partie de guidage.

8. Assemblage selon la revendication 7, dans lequel l'élément de maintien est une patte de fixation (402) solidaire du premier élément de fixation dont une extrémité est insérée dans, ou en prise avec, un orifice de la partie de guidage et dans lequel la partie de guidage (50) comprend des surfaces inclinées (506) conformées pour écarter ladite patte de fixation de l'orifice (505) de la partie de guidage lors d'un déplacement du premier élément de fixation en direction de la partie de guidage, cet écartement étant suffisant pour provoquer le dégagement de l'extrémité de la patte de fixation hors dudit orifice.

9. Guide d'air (10) pour un assemblage avec un élément structurel (20) selon l'une des revendications 1 à 8, comprenant au moins deux premiers éléments de fixation (31, 31', 31", 31"') disposés sur des bords latéraux (11) et destinés à coopérer avec des deuxièmes éléments de fixation (32) solidaires dudit élément structurel (20) suivant une même direction de fixation, les premiers éléments de fixation (31, 31', 31", 31"') faisant saillie latéralement d'un cadre défini par les bords latéraux de l'élément structurel suivant une direction sensiblement perpendiculaire à la direction de fixation, lorsque le guide d'air est assemblé à l'élément structurel, **caractérisé en ce que** :
- le premier élément de fixation (31, 31', 31", 31"') est solidarisé au guide d'air par des moyens de maintien (40, 40', 40", 40"') conformés pour se rompre suite à un choc suivant une direction sensiblement parallèle à la direction de fixation,
- les bords latéraux (11) du guide d'air présentent des parties de guidage (50, 50', 50", 50'") situées sensiblement en regard des deuxièmes éléments de fixation lorsque le guide d'air est assemblé à l'élément structurel, chaque partie de guidage (50, 50', 50", 50'") étant conformée pour guider un bord latéral de l'élément structurel supportant un deuxième élément de fixation à l'intérieur du guide d'air suite à une rupture du premier élément de fixation coopérant avec ledit deuxième élément de fixation, cette rupture résultant d'un déplacement du guide d'air vers l'élément structurel suivant une direction sensiblement parallèle à la direction de fixation.

10. Véhicule automobile équipé d'un assemblage selon l'une des revendications 1 à 8, dans lequel la direction de fixation du guide d'air est parallèle ou sensiblement parallèle à la direction longitudinale du véhicule, le guide d'air étant fixé à l'avant de l'élément structurel.

## Patentansprüche

1. Zusammenbau eines Luftleiters (10) mit einem Strukturelement (20) eines Kraftfahrzeugs, der mindestens zwei Befestigungseinrichtungen (30) des Luftleiters am Strukturelement enthält, wobei die Befestigungseinrichtungen (30) an Seitenrändern (11, 21) des Luftleiters und des Strukturelements angeordnet sind, wobei jede Befestigungseinrichtung (30) ein erstes Befestigungselement (31, 31', 31", 31"'), das fest mit dem Luftleiter (10) verbunden ist, und ein zweites Befestigungselement (32) enthält, das fest mit dem Strukturelement (20) verbunden ist, wobei das erste und das zweite Befestigungselement (31, 31', 31", 31"', 32) ausgebildet sind, um gemäß einer gleichen Befestigungsrichtung zusammenzuwirken, wobei die Befestigungseinrichtungen (30) von einem durch die Seitenränder (21) des Strukturelements definierten Rahmen gemäß einer Richtung im Wesentlichen lotrecht zur Befestigungsrichtung seitlich vorstehen, **dadurch gekennzeichnet, dass**:
- das erste Befestigungselement (31, 31', 31", 31"') durch Halteeinrichtungen (40, 40', 40", 40"') fest mit dem Luftleiter verbunden wird, die gestaltet sind, um nach einem Aufprall gemäß einer Richtung im Wesentlichen parallel zur Befestigungsrichtung zu brechen,
- die Seitenränder (11) des Luftleiters Leitbereiche (50, 50', 50", 50"') aufweisen, die sich im Wesentlichen gegenüber den zweiten Befestigungselementen (32) befinden, wobei jeder Leitbereich (50, 50', 50", 50"') gestaltet ist, um einen ein zweites Befestigungselement (32) tragenden Seitenrand (21) des Strukturelements innerhalb des Luftleiters nach einem Bruch der Halteeinrichtungen (40, 40', 40", 40"') des mit dem zweiten Befestigungselement zusammenwirkenden ersten Befestigungselements zu leiten, wobei dieser Bruch aus einer Verschiebung des Luftleiters zum Strukturelement gemäß einer Richtung im Wesentlichen parallel zur Befestigungsrichtung resultiert.

2. Zusammenbau nach Anspruch 1, **dadurch gekennzeichnet, dass** ein zum Strukturelement gerichteter freier Rand (503, 503', 503", 503"') eines Leitbereichs nicht gegenüber diesem Strukturelement gemäß der Befestigungsrichtung ist.

3. Zusammenbau nach einem der Ansprüche 1 oder 2, **dadurch gekennzeichnet, dass** ein Leitbereich (50, 50', 50", 50"') eine zum Inneren des Luftleiters und zum Strukturelement offene Vertiefung definiert, wobei die Vertiefung eine vom Luftleiter zum Strukturelement gemäß einer Richtung im Wesentlichen parallel zur Befestigungsrichtung ausgeweitete Form aufweist.

4. Zusammenbau nach Anspruch 3, **dadurch gekennzeichnet, dass** der Leitbereich (50, 50', 50", 50"') mindestens eine schräge Seitenfläche (501, 501', 501", 501"') aufweist, die sich gemäß einer Richtung im Wesentlichen parallel zur Befestigungsrichtung zum Strukturelement hin ausweitet.

5. Zusammenbau nach einem der Ansprüche 1 bis 4, **dadurch gekennzeichnet, dass** die Halteeinrichtungen (40, 40', 40", 40"') ein erstes Befestigungselement mit einem Leitbereich verbinden.

6. Zusammenbau nach einem der Ansprüche 1 bis 5, **dadurch gekennzeichnet, dass** die Halteeinrichtungen (40, 40', 40", 40"') ein Scharnier (401, 401', 401", 401") enthalten, das das erste Befestigungselement mit einem freien Rand (503, 503', 503", 503"') des Leitbereichs verbindet.

7. Zusammenbau nach einem der Ansprüche 1 bis 6, **dadurch gekennzeichnet, dass** die Halteeinrichtungen (40, 40', 40", 40"') mindestens ein Halteelement (402, 402', 402", 402"') enthalten, das gestaltet ist, um das erste Befestigungselement zu halten, wobei das Halteelement ausgewählt wird aus:
- einem Anschlag (402"), der von einem Buckel des Leitbereichs gebildet wird,
- einem angesetzten Anschlag, der am Leitbereich befestigt ist,
- einer Befestigungslasche (402'), die fest mit dem Leitbereich und dem ersten Befestigungselement verbunden ist,
- einer Befestigungslasche (402, 402"'), die fest mit dem ersten Befestigungselement verbunden ist, von der ein Ende in eine Öffnung des Leitbereichs eingeführt oder damit in Eingriff ist.

8. Zusammenbau nach Anspruch 7, wobei das Halteelement eine fest mit dem ersten Befestigungselement verbundene Befestigungslasche (402) ist, von der ein Ende in eine Öffnung des Leitbereichs eingeführt oder damit in Eingriff ist, und wobei der Leitbereich (50) geneigte Flächen (506) enthält, die gestaltet sind, um die Befestigungslasche bei einer Verschiebung des ersten Befestigungselements in Richtung des Leitbereichs von der Öffnung (505) des Leitbereichs beiseite zu schieben, wobei dieses Beiseiteschieben ausreichend ist, um das Lösen des Endes der Befestigungslasche aus der Öffnung zu bewirken.

9. Luftleiter (10) für einen Zusammenbau mit einem Strukturelement (20) nach einem der Ansprüche 1 bis 8, der mindestens zwei erste Befestigungselemente (31, 31', 31", 31"') enthält, die auf Seitenrändern (11) angeordnet und dazu bestimmt sind, mit zweiten Befestigungselementen (32), die fest mit dem Strukturelement (20) verbunden sind, gemäß einer gleichen Befestigungsrichtung zusammenzuwirken, wobei die ersten Befestigungselemente (31, 31', 31", 31"') von einem durch die Seitenränder des Strukturelements definierten Rahmen gemäß einer Richtung im Wesentlichen lotrecht zur Befestigungsrichtung seitlich vorstehen, wenn der Luftleiter mit dem Strukturelement zusammengebaut ist, **dadurch gekennzeichnet, dass**:
- das erste Befestigungselement (31, 31', 31", 31"') durch Halteeinrichtungen (40, 40', 40", 40"') fest mit dem Luftleiter verbunden ist, die gestaltet sind, um nach einem Aufprall gemäß einer Richtung im Wesentlichen parallel zur Befestigungsrichtung zu brechen,
- die Seitenränder (11) des Luftleiters Leitbereiche (50, 50', 50", 50"') aufweisen, die sich im Wesentlichen gegenüber den zweiten Befestigungselementen befinden, wenn der Luftleiter mit dem Strukturelement zusammengebaut ist, wobei jeder Leitbereich (50, 50', 50", 50"') gestaltet ist, um einen ein zweites Befestigungselement tragenden Seitenrand des Strukturelements innerhalb des Luftleiters nach einem Bruch des mit dem zweiten Befestigungselement zusammenwirkenden ersten Befestigungselements zu leiten, wobei dieser Bruch aus einer Verschiebung des Luftleiters zum Strukturelement gemäß einer Richtung im Wesentlichen parallel zur Befestigungsrichtung resultiert.

10. Kraftfahrzeug, das mit einem Zusammenbau nach einem der Ansprüche 1 bis 8 ausgestattet ist, wobei die Befestigungsrichtung des Luftleiters parallel oder im Wesentlichen parallel zur Längsrichtung des Fahrzeugs ist, wobei der Luftleiter an der Vorderseite des Strukturelements befestigt ist.

## Claims

1. Assembly of an air guide (10) on a structural component (20) of a motor vehicle comprising at least two fastening means (30) of the air guide to the structural component, said fastening means (30) being disposed on lateral edges (11, 21) of said air guide and of the structural component, each fastening means (30) comprising a first fastening component (31, 31', 31", 31"') integral with the air guide (10) and a second fastening component (32) integral with the structural component (20), the first and second fastening components (31, 31', 31", 31"', 32) being formed to work together in a same fastening direction, the fastening means (30) projecting laterally from a frame defined by the lateral edges (21) of the structural component in a direction substantially perpendicular to the fastening direction,
**characterized in that**:
- the first fastening component (31, 31', 31", 31"') is joined to the air guide by retaining means (40, 40', 40", 40"') formed to break following an impact in a direction substantially parallel to the fastening direction,
- the lateral edges (11) of the air guide exhibit guide parts (50, 50', 50", 50"') situated substantially opposite second fastening components (32), each guide part (50, 50', 50", 50"') being formed to guide a lateral edge (21) of the structural component supporting a second fastening component (32) inside the air guide following a breakage of the retaining means (40, 40', 40", 40"') of the first fastening component working together with said second fastening component, this breakage resulting in a movement of the air guide towards the structural component in a direction substantially parallel to the fastening direction.

2. Assembly according to Claim 1, **characterized in that** a free edge (503, 503', 503", 503"') of a guide part directed towards the structural component is not opposite this structural component in the fastening direction.

3. Assembly according to either of Claims 1 or 2, **characterized in that** a guide part (50, 50', 50", 50"') defines a concavity open towards the inside of the air guide and towards the structural component, said concavity exhibiting a splayed shape from the air guide towards the structural component in a direction substantially parallel to the fastening direction.

4. Assembly according to Claim 3, **characterized in that** the guide part (50, 50', 50", 50"') exhibits at least one sloping section (501, 501', 501", 501"') splayed towards the structural component in a direction substantially parallel to the fastening direction.

5. Assembly according to one of Claims 1 to 4, **characterized in that** the retaining means (40, 40', 40", 40"') link a first fastening component to a guide part.

6. Assembly according to one of Claims 1 to 5, **characterized in that** the retaining means (40, 40', 40", 40"') comprise a hinge (401, 401', 401", 401"') linking the first fastening component to a free edge (503, 503', 503", 503"') of said guide part.

7. Assembly according to one of Claims 1 to 6, **characterized in that** the retaining means (40, 40', 40", 40"') comprise at least one retaining component (402, 402', 402", 402"') formed to hold the first fastening component, the retaining component being chosen from among:
- a stop (402") formed by a boss on the guide part,
- a mounted stop fastened to the guide part,
- a fastening lug (402') integral with the guide part and the first fastening component,
- a fastening lug (402, 402"') integral with the first fastening component, one end of which is inserted in, or is in contact with, a hole in the guide part.

8. Assembly according to Claim 7, wherein the retaining component is a fastening lug (402) integral with the first fastening component, one end of which is inserted in, or in contact with, a hole in the guide part, and wherein the guide part (50) comprises sloping surfaces (506) formed to move said fastening lug away from the hole (505) in the guide part during a movement of the first fastening component in the direction of the guide part, this spacing being sufficient to cause the end of the fastening lug to disengage from said hole.

9. Air guide (10) for an assembly with a structural component (20) according to one of Claims 1 to 8, comprising at least two first fastening components (31, 31', 31", 31"') disposed on the lateral edges (11) and intended to work together with second fastening components (32) integral with said structural component (20) in a same fastening direction, the first fastening components (31, 31', 31", 31"') projecting laterally from a frame defined by the lateral edges of the structural component in a direction substantially perpendicular to the fastening direction when the air guide is assembled on the structural component, **characterized in that**:
- the first fastening component (31, 31', 31'', 31"') is joined to the air guide by retaining means (40, 40', 40", 40"') formed to be broken following an impact in a direction substantially parallel to the fastening direction,
- the lateral edges (11) of the air guide exhibit guide parts (50, 50', 50", 50"') situated substantially opposite second fastening components when the air guide is assembled on the structural component, each guide part (50, 50', 50", 50"') being formed to guide a lateral edge of the structural component supporting a second fastening component inside the air guide following a breakage of the first fastening component working together with said second fastening component, this breakage resulting from a movement of the air guide towards the structural component in a direction substantially parallel to the fastening direction.

10. Motor vehicle equipped with an assembly according to one of Claims 1 to 8, wherein the fastening direction of the air guide is parallel or substantially parallel to the longitudinal direction of the vehicle, the air guide being fastened to the front of the structural component.
